# EUROPEAN PATENT APPLICATION

(11) **EP 4 343 648 A1**
(43) Date of publication of application: **27.03.2024**
(21) Application number: 22197575.8
(22) Date of filing: 23.09.2022
(51) Int. Cl.: G06Q 10/0631, G06Q 10/02, G06Q 50/30, B64D 45/00, B64F 1/30, B64D 11/06, B64F 1/305

(54) **AIRCRAFT BOARDING OPTIMISATION SYSTEM**

(71) Applicant: B/E Aerospace, Inc., Winston Salem, NC 27105 (US)
(72) Inventor: PANJER, Frederik Adrian Stephan, 3953 BW Maarsbergen Urecht (NL)
(74) Representative: Dehns

(57) **Abstract**

A boarding system and a computer-implemented method for boarding a plurality of passengers onto an aircraft, the aircraft having a plurality of seats and each passenger having an assigned seat from amongst the plurality of seats. The boarding system 100 comprises a passenger monitoring system 120 comprising a plurality of monitoring devices, the monitoring devices being configured to determine an occupancy of each of the plurality of seats and/or to determine an occupancy of one or more aisle or boarding tunnel; and a scheduling system 110 configured to control a boarding schedule 112, the boarding schedule 112 assigning each seat to one of a plurality of groups of seats, and comprising a pre-determined boarding sequence for the plurality of groups of seats. The scheduling system 110 is configured to determine time intervals between boarding each of the groups in the boarding schedule 112 based on the determined occupancies of the plurality of seats on the aircraft and/or the determined occupancy of the one or more aisle or boarding tunnel.

## Description

The present invention relates to a boarding system and a computer-implemented method for boarding a plurality of passengers onto an aircraft.

The boarding process of a commercial flight can be frustrating due to the time spent waiting for other passengers to board the aircraft once boarding has started. Generally, most people rush to be seated which in turn results in long waiting lines at the gate, in the boarding tunnel/bridge and in the aircraft aisles due to flow congestion. This is often caused by passengers all attempting to board the plane at the same time and in a 'random' order (i.e. not ordered by the assigned seats of the passengers), which leads to passengers needing to pass each other while others are standing 'in the way', mostly also with luggage in hand - the storage of which, in overhead compartments, can further exacerbate the problems of congestion. This inefficiency increases the aircraft turnaround time and passenger frustration.

At least the preferred embodiments of the present invention aim to optimise passenger flow from the boarding gate to their assigned seat and to address congestion issues in the aircraft boarding process.

According to a first aspect of the invention there is provided a boarding system for boarding a plurality of passengers onto an aircraft, the aircraft having a plurality of seats and each passenger having an assigned seat from amongst the plurality of seats, the boarding system comprising: a passenger monitoring system comprising a plurality of monitoring devices, the monitoring devices being configured to determine an occupancy of each of the plurality of seats and/or to determine an occupancy of one or more aisle or boarding tunnel; a scheduling system configured to control a boarding schedule, the boarding schedule assigning each seat to one of a plurality of groups of seats, and comprising a pre-determined boarding sequence for the plurality of groups of seats; wherein the scheduling system is configured to determine time intervals between boarding each of the groups in the boarding schedule based on the determined occupancies of the plurality of seats on the aircraft and/or the determined occupancy of the one or more aisle or boarding tunnel.

According to a second aspect of the invention there is provided a computer-implemented method of boarding a plurality of passengers onto an aircraft, the aircraft having a plurality of seats and each passenger having an assigned seat from amongst the plurality of seats, the method comprising: determining an occupancy of each of the plurality of seats and/or determining an occupancy of one or more aisle or boarding tunnel; and determine time intervals between boarding each of a plurality of groups of seats in a boarding schedule based on the determined occupancies of the plurality of seats on the aircraft and/or the determined occupancy of the one or more aisle or boarding tunnel, wherein the boarding schedule assigns each seat to one of the plurality of groups of seats, and comprises a pre-determined boarding sequence for the plurality of groups of seats.

The boarding system and computer-implemented method provide for the automatic and continuous regulation of a boarding schedule based on the determined occupancies of the plurality of seats on the aircraft and/or the determined occupancy of the one or more aisle or boarding tunnel, in order to avoid/mitigate the formation of queues and congestion points and thus improve the speed and smoothness of the boarding process.

During the boarding process of an aircraft, the boarding schedule is used to determine when, and in what order, each of the plurality of passengers is allowed access to a boarding gate. Thus, generally, a boarding schedule comprises a boarding order (and optionally boarding times) for a plurality of seats, each seat having an assigned passenger.

One example of a boarding method dictated by a boarding schedule is group boarding, wherein the boarding schedule assigns each seat to one of a plurality of groups of seats, and the boarding schedule comprises a pre-determined boarding sequence for the plurality of groups of seats.

The groups of seats may be based on passenger ticket class and/or passenger accessibility profiles. For example, one or more business class seats may be assigned to a business class group, or one or more wheelchair accessible seats may be assigned to a wheelchair accessible group. Thus, in the boarding schedule, a group of business class seats or a group of wheelchair accessible seats may be determined to be higher up (or lower down) in the boarding sequence than a group of economy seats.

The groups of seats may be based on a location of the seats in the aircraft. For example, one or more seats in the same row may be assigned to the same group. Similarly, one or more adjacent rows of seats may be assigned to the same group.

In order to alleviate passenger congestion, the pre-determined boarding schedule may comprise pre-determined time intervals between the boarding of each of the groups, to space out the boarding of each of the groups.

The pre-determined time interval may be based on the type of at least one of the groups it is between. For example, a pre-determined time interval after a group of wheelchair accessible seats may be longer than a pre-determined time interval after a group of frequent flyer seats, so that the wheelchair passengers have sufficient time to comfortably be seated. Similarly, a pre-determined time interval after a group of frequent flyer seats may be shorter than a pre-determined time interval after a group of economy seats, because the frequent flyer passengers will be able to board more quickly and efficiently.

Accordingly, the boarding schedule may dictate when (and in what order) each of the plurality of passengers is allowed access to the boarding gate, e.g. when that passenger is permitted to pass through the boarding gate and begin moving along a boarding path, based on the group to which their seat has been assigned. In other words, the access of each of the plurality of passengers to the boarding gate is controlled by the scheduling system in accordance with the boarding schedule.

The scheduling system is configured to determine time intervals between boarding each of the groups in the boarding schedule based on the determined occupancies of the plurality of seats on the aircraft and/or the determined occupancy of the one or more aisle or boarding tunnel. In other words, the scheduling system is configured to modify the time intervals between groups of seats in the boarding schedule in response to data received from the passenger monitoring system, particularly where it is determined that boarding of a group of seats has been faster/slower than expected (e.g. faster/slower than the corresponding pre-determined time interval).

Specifically, the scheduling system may be configured to reduce one or more of the time intervals in response to determining that the determined occupancy of the one or more aisle or boarding tunnel is below a predetermined target occupancy.

For example, if the passenger monitoring system identifies that the one or more aisle or the boarding tunnel are less than the predetermined target occupancy, then the scheduling system may speed up boarding by reducing the time intervals between the next one or more group(s) in the boarding schedule.

The scheduling system may be configured to increase one or more of the time intervals in response to determining that the determined occupancy of the one or more aisle or boarding tunnel is above the predetermined target occupancy.

For example, if the passenger monitoring system identifies that one or more aisle or the boarding tunnel are more than the predetermined target occupancy, then the scheduling system may slow down boarding by increasing the time intervals between the next one or more group(s) in the boarding schedule.

The scheduling system may be configured to increase one or more of the time intervals in the boarding schedule in response to determining that the determined occupancy of a group of seats is below a predicted occupancy. The predicted occupancy may be based on a time since passengers in the respective group of seats were permitted to being boarding.

For example, if the passenger monitoring system identifies that the occupancy of a group of seats is below the predicted occupancy, then the scheduling system may slow down boarding by increasing the time intervals between the next one or more group(s) in the boarding schedule.

The scheduling system may be configured to reduce one or more of the time intervals in the boarding schedule in response to determining that the determined occupancy of a group of seats is above the predicted occupancy.

For example, if the passenger monitoring system identifies that the occupancy of a group of seats is above the predicted occupancy, then the scheduling system may speed up boarding by reducing the time intervals between the next one or more group(s) in the boarding schedule.

The scheduling system may be configured to receive an expected occupancy for each of the seats from an airline database. The expected occupancy of a seat is based on whether or not the seat is expected to be occupied during the flight, i.e. whether the seat has been assigned to a passenger (or not).

The scheduling system may be configured to determine the time intervals based on the expected occupancies of the seats.

The scheduling system may be configured to reduce (e.g. relative to one or more default time intervals for full occupancy of the aircraft) one or more of the time intervals in response to determining that an expected occupancy of a group of seats is below a predetermined threshold occupancy.

The plurality of monitoring devices may comprise a plurality of pressure sensors, each pressure sensor being located in a respective seat.

The plurality of monitoring devices may comprise a plurality of optical sensors, each optical sensor being associated with one or more seats. The plurality of optical sensors may comprise Time-of-flight (ToF) sensors, video cameras or infra-red cameras.

The plurality of monitoring devices may comprise a plurality of ultrasonic sensors, each ultrasonic sensor being associated with a respective seat.

The plurality of monitoring devices may comprise one or more sensors located in an aisle of the aircraft and/or a boarding tunnel.

Thus, the passenger monitoring system may be configured to monitor an occupancy of the aisle and/or the boarding tunnel.

The scheduling system may be configured to control passenger access to the boarding gate by displaying at least part of the boarding schedule on one or more airport monitors.

At least part of the boarding schedule, in the form of passenger notifications and information, can be displayed on airport monitors (e.g. boarding gate monitors) to, for example, inform passengers that have not yet been granted access to the boarding gate when they should approach the boarding gate to be granted access. The displayed part of the boarding schedule may include an assigned seat number of one or more passengers and, preferably, a time that the passenger with the specified seat number will be granted access through the boarding gate. Alternatively, the displayed part of the boarding schedule may include an assigned seat number of one or more passengers and a recommended status of the passenger of the specified seat number, such as "Boarding Now" or "Get Ready to Board". By providing passengers with specific, continuously updated information about when they should approach the boarding gate, the system can avoid confusion during the boarding process and prevent congestion/crowds from developing before/at the boarding gate and/or on a boarding path.

The scheduling system may be configured to control passenger access to the boarding gate by communicating a personalised boarding schedule to a mobile device of one or more of the plurality of passengers. The personalised boarding schedule may be derived from the boarding schedule of the scheduling system and may correspond to the respective passenger.

The scheduling system may be configured to communicate the personalised boarding schedule to the mobile device via SMS messaging. Optionally, the scheduling system may be configured to communicate with, or be integrated with, a third party mobile application (e.g. an application of an airline provider). As such, the scheduling system can directly communicate at least part of the boarding schedule, in the form of the personalised boarding schedules, to passengers as required. The personalised boarding schedule may comprise information including an assigned seat number of one or more passengers and/or an estimated time that the one or more passengers with the specified seat number will be granted access to the boarding gate. The personalised boarding schedule communication may be configured to generate a notification (e.g. an alert, such as an audible alert, a visual alert or a vibration) to notify the passenger of a change of recommended status of the passenger. For example, the notification may indicate whether a passenger should be "Boarding Now", or should "Get Ready to Board". The notification may indicate that there has been a change of the estimated time of boarding. By providing passengers with specific, continuously updated information about when they should approach the boarding gate, the scheduling system can avoid confusion during the boarding process and prevent congestion/crowds from developing before/at the boarding gate and/or on a boarding path.

The scheduling system may be configured to communicate the occupancy of one or more of the seats to a user device of a staff member.

A preferred embodiment of the present invention will now be described in greater detail, by way of example only and with reference to the drawings, in which:
Figure 1 shows a schematic diagram of a boarding system for boarding a plurality of passengers onto an aircraft; and
Figure 2 shows an aircraft during boarding of a plurality of passengers onto the aircraft.

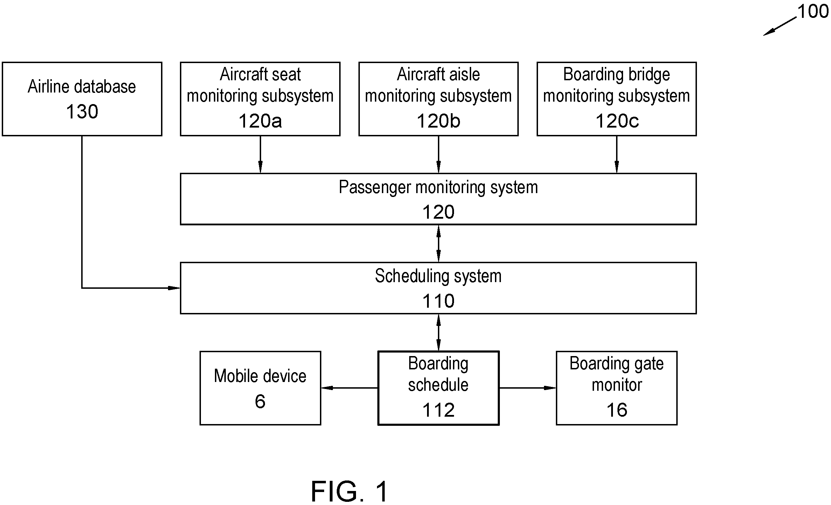

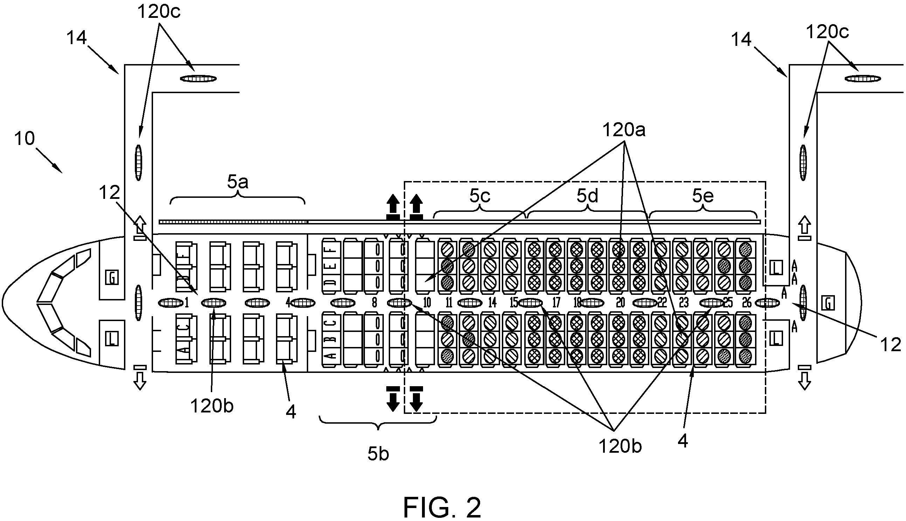

Figure 1 shows a boarding system 100 for boarding a plurality of passengers 1 onto an aircraft. Figure 2 shows an airport boarding terminal with an aircraft 10 utilising the boarding system 100 to assist the boarding of the plurality of passengers 1 onto the aircraft 10.

As shown in Figure 1, the boarding system 100 comprises a scheduling system 110 and a passenger monitoring system 120.

The passenger monitoring system 120 comprises an aircraft seat monitoring subsystem 120a, an aircraft aisle monitoring subsystem 120b and a boarding bridge monitoring subsystem 120c.

The scheduling system 110 is configured to maintain a boarding schedule 112 and to modify the boarding schedule 112 in response to data received from the passenger monitoring system 120.

The plurality of passengers 1 are informed of the changes/updates to the boarding schedule 112 by displaying at least part of the boarding schedule 112 on one or more boarding gate monitors 16 and/or by communicating at least part of the boarding schedule 112 (e.g. a personalised boarding schedule) to a mobile device 6 of one or more of the plurality of passengers 1.

With reference to Figure 2, during boarding of the aircraft 10 the boarding schedule 112 is used to determine when, and in what order, each of the plurality of passengers 1 is allowed access through a boarding gate. The scheduling system 110 is configured to adapt/modify the boarding schedule 112 in response to data received from the passenger monitoring system 120, particularly where groups of passengers may take more or less time to be seated than expected, such that the flow of passengers from the boarding gate to their seats is not optimal. For example, where a group of passengers takes longer than expected to reach their seats, then a congestion point or queue may develop. Where a group of passengers takes less time than expected to reach their seats, the following group of passengers will be more spaced out than needed, and could have been allowed access through the boarding gate sooner without causing congestion (thus speeding up the boarding process).

Ideally, the boarding schedule 112 is controlled such that the aircraft is filled in the minimum amount of time, i.e. without significant gaps between each passenger 1 being seated, but also such that each passenger 1 spends the least time travelling between the boarding gate and their assigned seat, i.e. with each passenger 1 having minimal time spent waiting in boarding tunnels or aircraft aisles.

Typically, the process of boarding passengers 1 onto an aircraft 10 is performed on a priority basis according to the passenger ticket class and/or passenger accessibility profiles. For example, passengers 1 that have first/business class tickets may be allowed to board earlier than passengers 1 with economy class tickets. However, passengers 1 can often get stuck standing in congestion points (e.g. small or large queues) at any location between the boarding gate and the passenger's assigned seat 4. For example, passengers 1 can get stuck moving through the boarding bridge and in the aircraft 10 aisles 12. These congestion points lead to a non-optimal boarding process resulting in longer boarding time and confusion during the boarding process.

The boarding schedule 112 comprises the boarding order and boarding times of the plurality of passengers 1. Specifically, the boarding schedule 112 comprises a predetermined sequence of groups 5a-5e of seats 4 of the aircraft 10. Each group 5a-5e comprises one or more seats 4, and where a group 5a-5e comprises a plurality of seats 4, these seats 4 will be generally be located in the same area of the aircraft 10. For example, a group of seats may comprise one or more adjacent rows of seats 4. Accordingly, the boarding schedule 112 dictates when each of the plurality of passengers 1 is allowed access to the boarding gate, e.g. when the passenger 1 with an assigned seat 4 is permitted to pass through the boarding gate and begin moving along a boarding path from the boarding gate to their assigned seat. In other words, the access of each of the plurality of passengers 1 to the boarding gate is controlled by the scheduling system 110 in accordance with the boarding schedule 112.

The scheduling system 110 can control the passenger 1 access to the boarding gate by displaying at least part of the boarding schedule on one or more airport monitors. The displayed part of the boarding schedule 112 includes the one or more assigned seat numbers 4 of a group 5 (indicated for example by row) and, preferably, a time that the group 5 will be granted access through the boarding gate. Alternatively, the displayed part of the boarding schedule may include the one or more assigned seat numbers of the group 5 and a recommended status of the passengers 1 having assigned seat numbers in that group 5, such as "Boarding Now" or "Get Ready to Board".

In the described boarding system 100, the scheduling system 110 is also configured to control passenger access to the boarding gate by communicating a personalised boarding schedule to a mobile device 6 of one or more of the plurality of passengers 1. The mobile device 6 may be a mobile phone, or other portable computing device, and may be delivered and/or displayed by an application running on the mobile device 6. At least part of the boarding schedule 112, in the form of a personalised boarding schedule, can thus be directly communicated to passengers 1, and comprise information including the assigned seat number 4 of one (or more) passengers and/or an estimated time that the group 5 comprising the assigned seat 4 number of the one (or more) passengers will be granted access to the boarding gate. The personalised boarding schedule communication may be configured to generate a notification (e.g. an alert, such as an audible alert, a visual alert or a vibration) to notify the passenger of a change of recommended status of the passenger. For example, the notification may indicate whether a passenger should be "Boarding Now", or should "Get Ready to Board". The notification may indicate that there has been a change of the estimated time of boarding for a group 5 based on changes to the boarding schedule 112.

Initially, the boarding schedule 112 could be, or at least be similar to, a conventional boarding schedule, in that the boarding order/boarding times of the plurality of passengers 1 is based on passenger ticket class and/or passenger accessibility profiles.

For example, as shown in Figure 2, the first group 5a is a group of first class seats 4. The scheduling system 110 will determine from the boarding schedule 112 that boarding can start, and will therefore allow passengers 1 that have assigned seats 4 within the first group 5a to access/pass through the boarding gate. After a pre-determined time interval has elapsed, the scheduling system 110 will determine that the second group 5b (comprising one or more business class seats 4) is allowed to access/pass through the boarding gate. Following another pre-determined interval, the scheduling system 110 will allow the third group 5c (comprising a first group of economy class seats) to access/pass through the boarding gate, and so on. In this manner, each group 5a-5e of seats 4 is allowed to board the aircraft 10 in accordance with the boarding schedule 112.

In order to optimise the boarding process, the passenger monitoring system 120 is configured to determine an occupancy of each of the plurality of seats 4 and/or to determine an occupancy of one or more aisle 12 or boarding tunnel 14. Accordingly, each of the aircraft seat monitoring subsystem 120a, aircraft aisle monitoring subsystem 120b and boarding bridge monitoring subsystem 120c comprise one or more monitoring devices, the monitoring device(s) being configured for identifying the presence of a passenger and therefore determine an occupancy of the relevant area/subsystem.

For instance, as shown in Figure 2, the aircraft seat monitoring subsystem 120a comprises a plurality of pressure sensors, each pressure sensor located in a respective/associated seat. Each pressure sensor is configured to determine if a passenger is sat in the seat in which it is installed, e.g. by detecting a force applied to the seat by the weight of a passenger.

Additionally, the described aircraft seat monitoring subsystem 120a comprises a plurality of optical sensors, each optical sensor being associated with one or more seats. Each optical sensor is configured to identify the presence of one or more passengers. For example, where an optical sensor is a video camera or infra-red camera, the optical sensor can record one or more seats and the aircraft seat monitoring subsystem 120a can analyse the video (e.g. using image analysis software, such machine learning software) to determine which of the seats are occupied. In another example, where an optical sensor is a time-of-flight (ToF) sensor associated with a seat, the optical sensor can detect when a passenger has sat in said seat. Alternatively, instead of an optical sensor such as ToF sensor, an ultrasonic sensor associated with a respective seat could be used.

The aircraft seat monitoring subsystem 120a can combine data received from different sensors in order to improve the accuracy of the system 120a. For example, if a passenger were to place a bag on a seat, a ToF sensor or an ultrasonic sensor associated with the seat may be triggered. However, a pressure sensor associated with the seat may not be triggered because the bag is not heavy enough - therefore the aircraft seat monitoring subsystem 120a may determine that a passenger is not sat down in the seat. Similarly, if a child is sat down in a seat, the pressure sensor may not be triggered because the child is not heavy enough. However, a video camera may determine, from the movement of the child or otherwise, that there is a passenger sat down in the seat - thus improving the accuracy of the aircraft seat monitoring subsystem 120a.

As also shown in Figure 2, the aircraft aisle monitoring subsystem 120b comprises a plurality of sensors located in the aisle 12 of the aircraft 10 (where the aircraft 10 has more than one aisle 12, each aisle 12 may comprises a plurality of sensors). The plurality of sensors may comprise, for example, a series of pressure sensors along the floor of the aisle 12 and/or one or more optical sensors (e.g. video cameras, infrared cameras, ToF sensors) or ultrasonic sensors along the floor or ceiling of the aisle 12. The plurality of sensors of the aircraft aisle monitoring subsystem 120b are configured to detect passengers walking or standing in the aisle 12, and the aircraft aisle monitoring subsystem 120b is configured to determine an occupancy of the aisle 12 based on the data received from its associated sensor(s).

As also shown in Figure 2, the boarding bridge monitoring subsystem 120c comprises a plurality of sensors located in the boarding tunnel/bridge 14. The plurality of sensors may comprise, for example, a series of pressure sensors along the floor of the boarding bridge 14 and/or one or more optical sensors (e.g. video cameras, infrared cameras, ToF sensors) or ultrasonic sensors along the floor or ceiling of the boarding bridge 14. The plurality of sensors of the aircraft aisle monitoring subsystem 120b are configured to detect passengers walking or standing in the boarding bridge 14, and the boarding bridge monitoring subsystem 120c is configured to determine an occupancy of the boarding bridge 14 based on the data received from its associated sensor(s).

In response to the occupancy data received from the passenger monitoring system 120 regarding the plurality of seats 4 on the aircraft 10 and/or the one or more aisle 12 or boarding tunnel 14, the scheduling system 110 is configured to determine the time intervals between the boarding of each of the groups 5a-5e. For instance, the scheduling system 110 may adjust the pre-determined time intervals between the boarding of each of the groups 5a-5e based on the determined occupancies of the plurality of seats 4 on the aircraft 10 and/or the determined occupancy of the one or more aisle 12 or boarding tunnel 14.

In one example, if the passenger monitoring system 120 identifies that the one or more aisle 12 or the boarding tunnel 14 are less than a target occupancy, the scheduling system 110 can speed up boarding by reducing the time intervals between the next one or more group(s) in the boarding schedule. In another example, if the passenger monitoring system identifies that one or more aisle or the boarding tunnel are more than the target occupancy, then the scheduling system may slow down boarding by increasing the time intervals between the next one or more group(s) in the boarding schedule. These approaches can help to reduce passenger congestion in the aisle(s) 12 and boarding tunnel 14 and/or speed up the boarding process.

In a further example, the scheduling system 110 may be configured to increase or decrease one or more of the time intervals in the boarding schedule 112 in response to determining that the occupancy of a group of seats is below a predetermined threshold. If, for instance, the first group 5a has been granted access to the aircraft 10, and the monitoring system 120 identifies that more than a predicted number of the passengers 1 of the first group 5a are sat down (based on the data from the sensors of the aircraft seat monitoring subsystem 120a), then the scheduling system 110 can reduce the next time interval in order to speed up when the next group 5b is allowed to begin boarding. Optionally, once more than a predetermined percentage of the passengers 1 of the first group 5a are sat down, the scheduling system 110 may call the second group 5b immediately, e.g. by minimising the next time interval.

The converse may also be true. If, for instance, the first group 5a has been granted access to the aircraft 10 via the boarding gate and the monitoring system 120 identifies that less than a predicted number of the passengers 1 of the first group 5a are sat down (based on the data from the sensors of the aircraft seat monitoring subsystem 120a), then the scheduling system 110 increases the next time interval in order to push back when the next group 5b is allowed to begin boarding, thus avoiding passenger congestion 1 and frustration. Optionally, the increase in the time interval may also be based on the occupancy data - e.g. the increase may be proportional to the number of passengers 1 of a group 5 that are not yet sat down (when they were predicted to be).

The scheduling system 110 may be configured to receive an expected occupancy for each of the seats 4 from an airline database 130. In other words, the scheduling system 110 may identify whether each seat 4 is going to be occupied or not, e.g. when the aircraft 10 is not going to be full once all passengers 1 are boarded. The scheduling system 110 may be configured to determine the time intervals based on the expected occupancies of the seats 4-for example, if there is only one seat occupied in the first group 5a, then less time is needed for all the passengers 1 in this group (i.e. a single passenger 1) to sit down.

Accordingly, the scheduling system 110 can reduce the next time interval (optionally calling the next group almost immediately, e.g. by minimising the next time interval) in order to speed up when the next group 5b is allowed to begin boarding, and thus speed up the boarding process.

In a similar manner, the scheduling system 110 may allow a plurality of groups 5a-5e to board at the same time in the boarding sequence if it is determined that the expected occupancy of said plurality of groups 5a-5e is below a predetermined threshold. For example, if the groups 5c, 5d, 5e of economy seats have an expected occupancy lower than a predetermined threshold, then the passengers 1 of these groups 5c, 5d, 5e are less likely to obstruct one another and cause congestion.

In a further example, the occupancy of one or more of the seats 4, as determined by the aircraft seat monitoring system 120a, is communicated to a user device of a staff member (such as a pilot, an aircraft crew member, or a ground crew member). Accordingly, the staff member is able to identify when a passenger 1 is sat in a particular seat 4. In addition, the expected occupancy of the one or more seats 4 is communicated to the user device, which allows the staff member to determine how the boarding process is progressing and/or when, or if, the correct number of passengers 1 has been boarded onto the aircraft 10.

Moreover, if - after the boarding process has been 'completed' - the determined occupancy of the seats 4 does not match the expected occupancy of the seats 4, the user device of the staff member may be notified.

## Claims

1. A boarding system for boarding a plurality of passengers onto an aircraft, the aircraft having a plurality of seats and each passenger having an assigned seat from amongst the plurality of seats, the boarding system comprising:
a passenger monitoring system comprising a plurality of monitoring devices, the monitoring devices being configured to determine an occupancy of each of the plurality of seats and/or to determine an occupancy of one or more aisle or boarding tunnel;
a scheduling system configured to control a boarding schedule, the boarding schedule assigning each seat to one of a plurality of groups of seats, and comprising a pre-determined boarding sequence for the plurality of groups of seats;
wherein the scheduling system is configured to determine time intervals between boarding each of the groups in the boarding schedule based on the determined occupancies of the plurality of seats on the aircraft and/or the determined occupancy of the one or more aisle or boarding tunnel.

2. A boarding system as claimed in claim 1, wherein the plurality of monitoring devices comprises at least one of:
a plurality of pressure sensors, each pressure sensor being located in a respective seat;
a plurality of optical sensors, each optical sensor being associated with one or more seats;
a plurality of ultrasonic sensors, each ultrasonic sensor being associated with a respective seat;
a plurality of optical sensors, each optical sensor being associated with one or more aisle or boarding tunnel; and
a plurality of ultrasonic sensors, each ultrasonic sensor being associated with one or more aisle or boarding tunnel.

3. A boarding system as claimed in claim 1 or 2, wherein the scheduling system is configured to reduce one or more of the time intervals in response to determining that the determined occupancy of the one or more aisle or boarding tunnel is below a predetermined target occupancy.

4. A boarding system as claimed in any preceding claim, wherein the scheduling system is configured to reduce one or more of the time intervals in response to determining that the determined occupancy of a group of seats is above a predicted occupancy or above a predetermined target occupancy.

5. A boarding system as claimed in any preceding claim, wherein the scheduling system is configured to receive an expected occupancy for each of the seats from an airline database, and wherein the scheduling system is configured to determine the time intervals based on the expected occupancies of the seats.

6. A boarding system as claimed in claim 5, wherein the scheduling system is configured to reduce one or more of the time intervals in response to determining that an expected occupancy of a group of seats is below a predetermined threshold occupancy.

7. A boarding system as claimed in any preceding claim, wherein the scheduling system is configured to:
display at least part of the boarding schedule on one or more boarding gate monitors; and/or
communicate a personalised boarding schedule to a mobile device of one or more of the plurality of passengers.

8. A boarding system as claimed in any preceding claim, wherein the scheduling system is configured to communicate the occupancy of one or more of the seats to a user device of a staff member.

9. A computer-implemented method of boarding a plurality of passengers onto an aircraft, the aircraft having a plurality of seats and each passenger having an assigned seat from amongst the plurality of seats, the method comprising:
determining an occupancy of each of the plurality of seats and/or determining an occupancy of one or more aisle or boarding tunnel; and
determine time intervals between boarding each of a plurality of groups of seats in a boarding schedule based on the determined occupancies of the plurality of seats on the aircraft and/or the determined occupancy of the one or more aisle or boarding tunnel,
wherein the boarding schedule assigns each seat to one of the plurality of groups of seats, and comprises a pre-determined boarding sequence for the plurality of groups of seats.

10. A computer-implemented method as claimed in claim 9, wherein determining the time intervals comprises reducing one or more of the time intervals in response to determining that the occupancy of the one or more aisle or boarding tunnel is below a predetermined target occupancy.

11. A computer-implemented method as claimed in claim 9 or 10, wherein determining the time intervals comprises reducing one or more of the time intervals in response to determining that the determined occupancy of a group of seats is above a predicted occupancy or above a predetermined target occupancy.

12. A computer-implemented method as claimed in any of claims 9 to 11, the method comprising:
receiving an expected occupancy for each of the seats from an airline database,
wherein determining the time intervals is further based on the expected occupancies of the seats.

13. A computer-implemented method as claimed in claim 12, wherein determining the time intervals comprises reducing one or more of the time intervals in response to determining that an expected occupancy of a group of seats is below a predetermined threshold occupancy.

14. A computer-implemented method as claimed in any of claims 9 to 13, the method comprising:
displaying at least part of the boarding schedule on one or more boarding gate monitors; and/or
communicating a personalised boarding schedule to a mobile device of one or more of the plurality of passengers.

15. A computer-implemented method as claimed in any of claims 9 to 14, the method comprising:
during boarding, communicating the occupancy of one or more of the seats to a user device of a staff member.
